# EUROPEAN PATENT SPECIFICATION

(11) **EP 1 710 008 B1**
(45) Date of publication and mention of the grant of the patent: **07.09.2011**
(21) Application number: 06251844.4
(22) Date of filing: 31.03.2006
(51) Int. Cl.: B01D 53/04, B01D 53/047, B01D 53/26, B01J 20/34

(54) **Regeneration control of hybrid PSA/TSA systems**
Regenerierungssteuerung eines Druck- und Temperaturwechseladsorptionssystems
Commande de régénération d'un système d'adsorption à pression et température alternée

(30) Priority: 08.04.2005 US 101789
(43) Date of publication of application: 11.10.2006
(73) Proprietor: Air Products and Chemicals, Inc., Allentown, PA 18195-1501 (US)
(72) Inventor: Schmidt, William Paul, Allentown, PA 18104 (US); Zwilling, Daniel Patrick, Drexel Hill, PA 19026 (US); Wright, Andrew David, Crewe, Cheshire CW1 3QU (GB); Kalbassi, Mohammad Ali, Weybridge, Surrey KT13 8SP (GB); Raiswell, Christopher James, Crewe, Cheshire CW1 8JQ (GB)
(74) Representative: Muir, Benjamin M. J.

(56) References cited:
- EP-A- 0 766 989
- EP-A- 0 815 920
- EP-A- 1 226 860
- FR-A- 2 617 059
- US-A- 4 541 851
- US-A- 4 832 711
- US-A- 5 855 650

## Description

### BACKGROUND OF THE INVENTION

The present invention is directed to an adsorption process for removing water and carbon dioxide (CO₂) from a feed gas that uses a hybrid of both temperature swing (i.e. TSA) and pressure swing (PSA) to regenerate the adsorbent. More specifically, the present invention relates to a process wherein:
(a) the process employs an adsorption vessel having a feed port for introducing the feed gas and a product port for withdrawing product gas;
(b) located adjacent to feed port is a water removal zone containing a water selective adsorbent (especially activated alumina or silica gel) for adsorbing the water from the feed gas;
(c) located between the water removal zone and the product port is a CO₂ removal zone containing a CO₂ selective adsorbent (especially molecular sieve) for adsorbing the CO₂ from the feed gas;
(d) the process cycles between an adsorption sequence and a regeneration sequence;
(e) during the adsorption sequence:
   (i) feed gas is passed through the vessel beginning at the feed port;
   (ii) at least a portion of the water selective adsorbent becomes saturated with water;
   (iii) at least a portion of the CO₂ selective adsorbent becomes saturated with CO₂; and
   (iv) product gas is withdrawn from the product port;
(f) during the regeneration sequence:
   (i) the vessel is depressurized to a lower pressure;
   (ii) beginning at the product port, a heating regeneration gas is passed through the vessel that provides a quantity of regeneration heat as a heat pulse to desorb (i.e. by temperature swing) substantially all of the CO₂ adsorbed during the adsorption sequence and a portion (but not the entire portion) of the water adsorbed during the adsorption sequence; and
   (iii) beginning at the product port, a cooling regeneration gas is passed through the vessel to desorb (i.e. by pressure swing) most or substantially all of the remaining water adsorbed during the adsorption sequence; and
   (iv) the vessel is pressurized with feed gas to prepare the vessel for its next adsorption sequence.

The above "hybrid" TSA/PSA process (hereafter the hybrid process) is taught. See in particular US-A-6,599,347 by Kalbassi et al. (hereafter "Kalbassi") which teaches the hybrid process in the context of a vertical adsorption vessel where the feed port is located at the bottom of the vessel and the feed gas flows upwardly before reaching the product port located at the top of the vessel.

A key challenge in the hybrid process is to precisely calculate the quantity of heat that needs to be provided by the heating regeneration gas in (f)(ii) above so no energy is wasted by heating the regeneration gas beyond what is necessary. As can be appreciated by one skilled in the art, the heat provided by the heating regeneration gas must be enough to drive the resultant heat pulse through the CO₂ removal zone such that it dies at a location (hereafter, the Design Location) inside the water removal zone that is far enough to have regenerated a significant portion of the water removal zone (i.e. by temperature swing), but not too far into the water removal zone such that the capacity of the cooling regeneration gas to complete the regeneration of the water removal zone (i.e. by pressure swing) is not fully utilized. In other words, the Design Location corresponds to the location within the water removal zone where the transition occurs from regeneration by temperature swing, to regeneration by pressure swing.

Kalbassi addresses this key challenge in the hybrid process by adjusting the quantity of heat to be provided by the heated regeneration gas as a function of the water content of the feed gas. As opposed to establishing a fixed quantity of heat based on the most adverse ambient conditions likely to be encountered, this provides significant energy savings. Kalbassi is an incomplete solution however vis-à-vis the present invention because, unlike the present invention, Kalbassi's adjustment of the necessary quantity of heat does not take into account temperature data during the regeneration sequence and particularly temperature data taken within a strategic portion (the Strategic Portion) of the water removal zone which is centered around the Design Location. This temperature data allows one to measure the *actual* location where the heat pulse dies and reconcile any discrepancies with the Design Location by appropriately adjusting the quantity of heat to be provided in the next regeneration sequence. The ability to fine-tune the adjustment of the provided heat from cycle to cycle in this fashion further increases the energy savings in Kalbassi.

In general, the Strategic Portion could be any portion of the water removal zone other than at or near the edges since, as can be appreciated by one skilled in the art, the edges of the water removal zone are not practical Design Locations for the heat pulse to die in a hybrid process due to risk of water contamination of the CO₂ adsorbent. In particular, if the Design Location is near the edge of water removal zone adjacent to CO₂ removal zone, this means little, if any, of the water removal zone is being regenerated by temperature swing; similarly, if the Design Location is near the edge of water removal zone where the feed gas is introduced, this means, little, if any, of the water removal zone vessel is being regenerated by pressure swing. To be more precise, if one were to think of the water selective adsorbent contained in the water removal zone as 10 equally thick layers (with layer 1 beginning at the end of the water removal zone adjacent to the feed port and proceeding sequentially to layer 10, layer 10 being adjacent the CO₂ removal zone), the Strategic Portion would comprise any 3-4 consecutive layers between (and including) layers 2 through 9. Given that the Design Location for the heat pulse to die in a typical hybrid system is typically somewhere between layers 6 and 9, it follows that the Strategic Portion will typically comprise layers 6 through 9.

US-A-6,402,809 (2002) by Monereau et al. assigned to L' Air Liquide also teaches the above referenced hybrid process. Monereau further teaches controlling the temperature of the regeneration gas depending on operating conditions which include the "thermal profile of the heat front output by the [adsorber] at the end of the regeneration". Or, as more particularly taught at column 5, line 5 of Monereau, the temperature of the regeneration gas is controlled according to the thermal profile as the "heat front leaves [the water removal zone]". Accordingly the temperature data is taken at the edge of water removal zone corresponding to layer 1 in the present invention's definition of the water removal zone. As discussed previously, this is contrary to teaching of present invention. In particular, such a location means, little, if any, of the ability to complete regeneration of the water removal zone vessel pressure swing is being utilized, and consequently the regeneration gas is being heated more than necessary.

US-A-4,541,851 (1985; corresponding to EP-A-0118349) by Bosquain et al. assigned to L'Air Liquide teaches the use of a radial adsorption bed in the above referenced hybrid process where the feed port distributes the feed gas into the exterior of the adsorption vessel, and the feed gas flows radially inward (first through the water removal zone and then through the CO₂ removal zone as in Kalbassi) before reaching the product port located in the interior of the vessel. To address the sensitivity of this geometry to the mechanical stress issues associated with the temperature fluctuation between the adsorption and regeneration sequences, Bosquain teaches the use of a temperature sensor disposed very close to the outer grate at the feed end of the water removal zone (i.e. again corresponding to layer 1 in the present invention's definition of the water removal zone) to prevent the heat pulse generated during regeneration from reaching this outer grate. In particular, Bosquain discloses an adsorption vessel comprising a container having two coaxial adsorbent layers in the form of sleeves retained by three cylindrical grates. The intermediate grate is axially rigid and radially flexible while the innermost and outermost grates are axially flexible and radially rigid. The feed gas passes radially through the sleeves and when water and CO₂ are to be removed, the direction of flow is such that the feed gas first contacts the water-adsorbent layer and then the CO₂-adsorbent layer. It is stated that, in practice, heating of the regeneration gas is stopped when the heat front substantially reaches the water-adsorbent bed.

FR-A-2617059 (1988) discloses regeneration of an adsorbent bed for dehydrating a gas in which regeneration gas is passed in the same direction as the feed and is heated only until the bed temperature exceeds a predetermined value at a predetermined location, whereby heat stored in the adsorbent zone regenerated by the heated regeneration gas is employed to regenerate the adsorbent in the following zone.

US-A-4,832,711 (1989) by Christel et al. assigned to Pall Corporation teaches use of an adsorbent for adsorbing water from a feed gas wherein, to conserve the heat generated by the adsorption sequence for use in heating the regeneration gas, the advance of the heat pulse through the adsorbent is measured during the adsorption sequence to allow the sequence to be discontinued before the resultant heat pulse leaves the product end of the bed. In one exemplified embodiment, microwave energy is used to regenerate the adsorbent and there are general references to controlling the heat regeneration cycle in response to bed temperature. Accordingly, the problem addressed by the present invention (i.e. precisely determining the quantity of external heat that needs to be provided during regeneration) is a non-issue in Christel.

EP-A-0766989 (1997; corresponding to US-A-5614000) discloses the regeneration of a single adsorbent bed for removing water by adsorption in an upstream (with respect to the feed direction) portion of the bed and CO₂ by adsorption in a downstream (with respect to the feed direction) portion of the bed. Regenerating gas contacts the adsorbent in a direction counter-current to the feed direction for a time to produce a heat pulse that ceases before the heat pulse travels as far as said upstream portion, whereby CO₂ is desorbed from the downstream portion by temperature swing adsorption whilst at the same time water is desorbed from the upstream portion by pressure swing adsorption.

EP-A-0815920 (1998; corresponding to US-A-5766311) discloses the regeneration of a dual adsorbent bed for removing water and CO₂ from a feed gas in a thermal swing adsorption process by use of multiple thermal pulses to regenerate the respective adsorption zones.

US-A-5,855,650 (1999; corresponding to EP-A-0901807) discloses the regeneration of a dual adsorbent bed for removing water and CO₂ from a feed gas in which the regenerating gas contacts the adsorbent for a period such that the heat added to the regenerating gas is no more than 90% of the heat of adsorption liberated during the adsorption and then the regenerating gas continues to pass in an unheated state to complete the regeneration. Thus, the heat pulse during regeneration does not penetrate through the whole of the water-adsorbent layer, but is fully dissipated to remove sufficient water and carbon dioxide, such that the remaining regeneration can be produced by the continuing flow of unheated regeneration gas.

EP-A-1226860 (2002; corresponding to US-A-6599347) discloses operation of a thermal swing adsorption process for removing water and carbon dioxide from a feed gas by determining a parameter relating to the water content of the feed gas, selecting process conditions for regeneration by heating based on the parameter and modifying the regeneration process conditions to accord with the selected process conditions for regeneration. In the exemplified embodiment, the feed gas is passed through a water selective adsorbent and then through a CO₂ selective adsorbent and the adsorbents are regenerated by passing a heated flow of regenerating gas through the CO₂ selective adsorbent, whereby a heat pulse passes through the CO₂ selective adsorbent, and then, for example as the heat pulse passes into the water selective adsorbent, passing an unheated flow of the regenerating gas into the CO₂ selective adsorbent to displace the heat pulse further through the water selective adsorbent. The flow rate and/or temperature of the regeneration gas is modified in response to the water content of the feed gas measured continuously or periodically to compensate for changes in the water content.

### BRIEF SUMMARY OF THE INVENTION

The present invention is an improved control scheme for an adsorption process that removes water and carbon dioxide (CO₂) from a feed gas using a hybrid of both temperature swing (i.e. TSA) and pressure swing (PSA) to regenerate the adsorbent. The control scheme comprises adjusting the quantity of heat to be provided by the regeneration gas as a function of temperature data taken within a strategic portion of the water selective adsorbent zone. The strategic portion corresponds to the location for the desired transition from regeneration by temperature swing, to regeneration by pressure swing. In a preferred embodiment of the present invention, said quantity of regeneration heat is also adjusted as a function of the water content of the feed gas.

Accordingly, the invention provides an adsorption process for removing water and CO₂ from a feed gas wherein:
(a) the process employs an adsorption vessel having a feed port for introducing the feed gas and a product port for withdrawing product gas;
(b) located adjacent to feed port is a water removal zone containing a water selective adsorbent for adsorbing the water from the feed gas;
(c) located between the water removal zone and the product port is a CO₂ removal zone containing a CO₂ selective adsorbent for adsorbing the CO₂ from the feed gas;
(d) the process cycles between an adsorption sequence and a regeneration sequence;
(e) during the adsorption sequence:
   (i) feed gas is passed through the vessel beginning at the feed port;
   (ii) at least a portion of the water selective adsorbent becomes saturated with water;
   (iii) at least a portion of the CO₂ selective adsorbent becomes saturated with CO₂; and
   (iv) product gas is withdrawn from the product port;
(f) during the regeneration sequence:
   (i) the vessel is depressurized to a lower pressure;
   (ii) beginning at the product port, a heating regeneration gas is passed through the vessel that provides a quantity of regeneration heat as a heat pulse to desorb substantially all of the CO₂ adsorbed during the adsorption sequence and a only a portion of the water adsorbed during the adsorption sequence; and
   (iii) beginning at the product port, a cooling regeneration gas is passed through the vessel to desorb most or substantially all of the remaining water adsorbed during the adsorption sequence; and
   (iv) the vessel is pressurized with feed gas to prepare the vessel for its next adsorption sequence;
characterized in that, considering the water selective adsorbent contained in the water removal zone to consist of ten equally thick notional layers, with layer 1 beginning at the end of the water removal zone adjacent to the feed gas port and the layers proceeding sequentially to layer 10 at the end of the water removal zone which is adjacent the CO₂ removal zone, the quantity of regeneration heat for the next regeneration sequence is adjusted as a function of temperature data taken within a "strategic portion" of the water selective adsorbent zone comprising any 3-4 consecutive layers between, and including, layers 2 through 9 so that the heat pulse dies within said strategic portion.

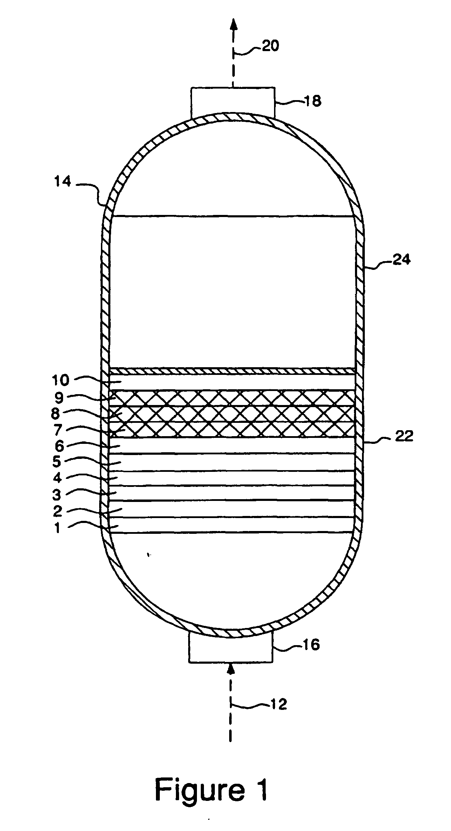

The following is a description by way of exemplification only and with reference to Figure 1 of one embodiment of the present invention.

### DETAILED DESCRIPTION OF THE INVENTION

Referring to Figure 1, the present invention relates to an adsorption process for removing water and CO₂ from a feed gas (12) wherein:
(a) the process employs an adsorption vessel (14) having a feed port (16) for introducing the feed gas and a product port (18) for withdrawing product gas (20);
(b) located adjacent to feed port is a water removal zone (22) containing a water selective adsorbent for adsorbing the water from the feed gas;
(c) located between the water removal zone and the product port is a CO₂ removal zone (24) containing a CO₂ selective adsorbent for adsorbing the CO₂ from the feed gas;
(d) the process cycles between an adsorption sequence and a regeneration sequence;
(e) during the adsorption sequence:
   (i) feed gas is passed through the vessel beginning at the feed port;
   (ii) at least a portion of the water selective adsorbent becomes saturated with water;
   (iii) at least a portion of the CO₂ selective adsorbent becomes saturated with CO₂; and
   (iv) product gas is withdrawn from the product port;
(f) during the regeneration sequence:
   (i) the vessel is depressurized to a lower pressure;
   (ii) beginning at the product port, a heating regeneration gas is passed through the vessel that provides a quantity of regeneration heat as a heat pulse to desorb substantially all of the CO₂ adsorbed during the adsorption sequence and a portion of the water adsorbed during the adsorption sequence; and
   (iii) beginning at the product port, a cooling regeneration gas is passed through the vessel to desorb most or substantially all of the remaining water adsorbed during the adsorption sequence; and
   (iv) the vessel is pressurized with feed gas to prepare the vessel for its next adsorption sequence.

The present invention is more particularly an improvement to the above process comprising adjusting the quantity of regeneration heat referenced in (f)(ii) for the next regeneration sequence as a function of temperature data taken within a strategic portion of the water selective adsorbent zone that, as discussed previously, corresponds to the design location for the heat pulse to die and which, if the water selective adsorbent contained in the water removal zone is notionally considered to consist of ten equally thick layers, with layer 1 beginning at the end of the water removal zone adjacent to the feed gas port and the layers proceeding sequentially to layer 10 at the end of the water removal zone which is adjacent the CO₂ removal zone, comprises any 3-4 consecutive layers between (and including) layers 2 through 9, but more typically, would comprise layers 6 through 9 as shown by the cross-shaded portion of the water removal zone in Figure 1.

In another embodiment of the present invention, the temperature data is obtained from two locations within the strategic portion, namely from a location in layer 9, and from a location in layer 6.

In another embodiment of the present invention, the quantity of heat to be provided by the heated regeneration gas is also adjusted as a function of the water content of the feed gas (i.e. as taught in Kalbassi).

In another embodiment of the present invention, the feed gas is air.

In another embodiment of the present invention, the product gas is fed to a cryogenic air separation unit and separated into its constituent components.

In another embodiment of the present invention, the water selective adsorbent is activated alumina.

In another embodiment of the present invention, the water selective adsorbent is silica gel.

In another embodiment of the present invention, the CO₂ selective adsorbent is molecular sieve.

In another embodiment of the present invention, the feed gas is natural gas.

In another embodiment of the present invention, the feed gas is a synthesis gas comprising carbon monoxide and hydrogen.

The embodiment of the present invention shown in Figure 1 employs a vertical flow vessel where (such as taught in Kalbassi) where the feed port (16) is located at the bottom of the adsorption vessel and the feed gas (12) flows upwardly through the adsorption vessel before reaching the product port (18) located at the top of the adsorption vessel. Alternatively, the present invention could employ a radial flow vessel (such as taught in Bosquain) where the feed port distributes the feed gas into the exterior of the adsorption vessel, and the feed gas flows radially through adsorption vessel (first through the water removal zone and then through the CO₂ removal zone as in Kalbassi) before reaching the product port located in the interior of the adsorption vessel.

## Claims

1. An adsorption process for removing water and CO₂ from a feed gas (12) wherein:
(a) the process employs an adsorption vessel (14) having a feed port (16) for introducing the feed gas (12) and a product port (18) for withdrawing product gas;
(b) located adjacent to feed port (16) is a water removal zone (22) containing a water selective adsorbent for adsorbing the water from the feed gas (12);
(c) located between the water removal zone (22) and the product port (18) is a CO₂ removal zone (24) containing a CO₂ selective adsorbent for adsorbing the CO₂ from the feed gas (12);
(d) the process cycles between an adsorption sequence and a regeneration sequence;
(e) during the adsorption sequence:
(i) feed gas (12) is passed through the vessel (14) beginning at the feed port (16);
(ii) at least a portion of the water selective adsorbent becomes saturated with water;
(iii) at least a portion of the CO₂ selective adsorbent becomes saturated with CO₂; and
(iv) product gas (20) is withdrawn from the product port (18);
(f) during the regeneration sequence:
(i) the vessel (14) is depressurized to a lower pressure;
(ii) beginning at the product port (18), a heating regeneration gas is passed through the vessel (14) that provides a quantity of regeneration heat as a heat pulse to desorb substantially all of the CO₂ adsorbed during the adsorption sequence and a only a portion of the water adsorbed during the adsorption sequence; and
(iii) beginning at the product port (18), a cooling regeneration gas is passed through the vessel (14) to desorb most or substantially all of the remaining water adsorbed during the adsorption sequence; and
(iv) the vessel (14) is pressurized with feed gas (12) to prepare the vessel for its next adsorption sequence;
**characterized in that**, considering the water selective adsorbent contained in the water removal zone (22) to consist of ten equally thick notional layers (1 - 10), with layer 1 beginning at the end of the water removal zone (22) adjacent to the feed gas port (16) and the layers proceeding sequentially to layer 10 at the end of the water removal zone (22) which is adjacent the CO₂ removal zone (24), the quantity of regeneration heat for the next regeneration sequence is adjusted as a function of temperature data taken within a "strategic portion" of the water selective adsorbent zone comprising any 3-4 consecutive layers between, and including, layers 2 through 9 so that the heat pulse dies within said strategic portion.

2. A process of Claim 1, wherein the strategic portion comprises layers 6 through 9.

3. A process of Claim 2, wherein the temperature data is obtained from a location in layer 9 and from a location in layer 6.

4. A process of any one of the preceding claims, wherein the quantity of heat to be provided by the heated regeneration gas is also adjusted as a function of the water content of the feed gas (12).

5. A process of any one of the preceding claims, wherein the feed gas (12) is air.

6. A process of Claim 5, wherein the product gas (20) is fed to a cryogenic air separation unit and separated into its constituent components.

7. A process of any one of Claims 1 to 4, wherein the feed gas (12) is natural gas.

8. A process of any one of Claims 1 to 4, wherein the feed gas (12) is a synthesis gas comprising carbon monoxide and hydrogen.

9. A process of any one of the preceding claims, wherein the water selective adsorbent is activated alumina.

10. A process of any one of Claims 1 to 6, wherein the water selective adsorbent is silica gel.

11. A process of any one of the preceding claims, wherein the CO₂ selective adsorbent is molecular sieve.

12. A process of any one of the preceding claims, wherein the adsorption vessel (14) is a vertical flow vessel where the feed port (16) is located at the bottom of the adsorption vessel (14) and the feed gas (12) flows upwardly through the adsorption vessel before reaching the product port (18) located at the top of the adsorption vessel.

13. A process of any one of Claims 1 to 11, wherein the adsorption vessel is a radial flow vessel where the feed port distributes the feed gas into the exterior of the adsorption vessel, and the feed gas flows radially through the adsorption vessel before reaching the product port located at the exterior of the adsorption vessel.

## Patentansprüche

1. Adsorptionsverfahren zum Entfernen von Wasser und CO₂ aus einer Gasbeschickung (12), wobei:
(a) das Verfahren ein Adsorptionsgefäß (14) verwendet, das eine Beschickungsöffnung (16) zum Einführen der Gasbeschickung (12) und eine Produktöffnung (18) zum Abziehen von Gasprodukt aufweist;
(b) sich an die Beschickungsöffnung (16) angrenzend eine Wasserentfernungszone (22) befindet, die ein für Wasser selektives Adsorptionsmittel enthält, um das Wasser aus der Gasbeschickung (12) zu adsorbieren;
(c) sich zwischen der Wasserentfernungszone (22) und der Produktöffnung (18) eine CO₂-Entfernungszone (24) befindet, die ein für CO₂ selektives Adsorptionsmittel enthält, um das CO₂ aus der Gasbeschickung (12) zu entfernen;
(d) das Verfahren zyklisch zwischen einer Adsorptionssequenz und einer Regenerierungssequenz umschaltet;
(e) wobei während der Adsorptionssequenz:
(i) die Gasbeschickung (12) beginnend an der Beschickungsöffnung (16) durch das Gefäß (14) geleitet wird;
(ii) zumindest ein Teil des für Wasser selektiven Adsorptionsmittels mit Wasser gesättigt wird;
(iii) zumindest ein Teil des für CO₂ selektiven Adsorptionsmittels mit CO₂ gesättigt wird; und
(iv) Gasprodukt (20) aus der Produktöffnung (18) abgezogen wird;
(f) wobei während der Regenerierungssequenz:
(i) das Gefäß (14) auf einen geringeren Druck entspannt wird;
(ii) beginnend an der Produktöffnung (18) ein erwärmendes Regenerierungsgas durch das Gefäß (14) geleitet wird, das eine Menge Regenerierungswärme als ein Wärmeimpuls bereitstellt, so daß im wesentlichen das gesamte, während der Adsorptionssequenz adsorbierte CO₂ und nur ein Teil des während der Adsorptionssequenz adsorbierten Wassers desorbiert werden; und
(iii) beginnend an der Produktöffnung (18) ein kühlendes Regenerierungsgas durch das Gefäß (14) geleitet wird, so daß der größte Teil des während der Adsorptionssequenz adsorbierten Wassers oder im wesentlichen das gesamte desorbiert wird; und
(iv) das Gefäß (14) mit Gasbeschickung (12) unter Druck gesetzt wird; so daß das Gefäß für seine nächste Adsorptionssequenz vorbereitet wird;
**dadurch gekennzeichnet, daß**, angenommen das in der Wasserentfernungszone (22) enthaltene, für Wasser selektive Adsorptionsmittel besteht aus 10 gleich dicken imaginären Schichten (1 bis 10), wobei die Schicht 1 am Ende der Wasserentfernungszone (22) an die Gasbeschickungsöffnung (16) angrenzend beginnt und die Schichten nacheinander bis zur Schicht 10 am Ende der Wasserentfernungszone (22) weitergehen, die an die CO₂-Entfernungszone (24) angrenzt, die Menge an Regenerierungswärme für die nächste Regenerierungssequenz als Funktion der Temperaturdaten eingestellt wird, die innerhalb eines "strategischen Bereichs" der für Wasser selektiven Adsorptionsmittelzone genommen wurden, die irgendwelche 3 bis 4 aufeinanderfolgende Schichten zwischen den und einschließlich der Schichten 2 bis 9 umfaßt, so daß der Wärmeimpuls innerhalb dieses strategischen Bereichs aufhört.

2. Verfahren nach Anspruch 1, wobei der strategische Bereich die Schichten 6 bis 9 umfaßt.

3. Verfahren nach Anspruch 2, wobei die Temperaturdaten von einer Stelle in der Schicht 9 und von einer Stelle in der Schicht 6 gewonnen werden.

4. Verfahren nach einem der vorstehenden Ansprüche, wobei die Wärmemenge, die vom erwärmten Regenerierungsgas bereitgestellt werden soll, auch als Funktion des Wassergehalts der Gasbeschickung (12) eingestellt wird.

5. Verfahren nach einem der vorstehenden Ansprüche, wobei die Gasbeschickung (12) Luft ist.

6. Verfahren nach Anspruch 5, wobei das Gasprodukt (20) einer Tieftemperatur-Lufttrennanlage zugeführt und in seine Bestandteile getrennt wird.

7. Verfahren nach einem der Ansprüche 1 bis 4, wobei die Gasbeschickung (12) Erdgas ist.

8. Verfahren nach einem der Ansprüche 1 bis 4, wobei die Gasbeschickung (12) ein Synthesegas ist, das Kohlenmonoxid und Wasserstoff umfaßt.

9. Verfahren nach einem der vorstehenden Ansprüche, wobei das für Wasser selektive Adsorptionsmittel aktiviertes Aluminiumoxid ist.

10. Verfahren nach einem der Ansprüche 1 bis 6, wobei das für Wasser selektive Adsorptionsmittel Kieselgel ist.

11. Verfahren nach einem der vorstehenden Ansprüche, wobei das für CO₂ selektive Adsorptionsmittel ein Molekularsieb ist.

12. Verfahren nach einem der vorstehenden Ansprüche, wobei das Adsorptionsgefäß (14) ein Gefäß mit Vertikalströmung ist, wobei sich die Beschickungsöffnung (16) am Boden des Adsorptionsgefäßes (14) befindet und die Gasbeschickung (12) nach oben durch das Adsorptionsgefäß strömt, bevor sie die Produktöffnung (18) erreicht, die sich an der Oberseite des Adsorptionsgefäßes befindet.

13. Verfahren nach einem der Ansprüche 1 bis 11, wobei das Adsorptionsgefäß ein Gefäß mit Radialströmung ist, wobei die Beschickungsöffnung die Gasbeschickung in die Außenseite des Adsorptionsgefäßes verteilt und die Gasbeschickung radial durch das Adsorptionsgefäß strömt, bevor sie die Produktöffnung erreicht, die sich an der Außenseite des Adsorptionsgefäßes befindet.

## Revendications

1. Procédé d'adsorption pour éliminer l'eau et le CO₂ d'un gaz d'alimentation (12) dans lequel :
(a) le procédé emploie une cuve d'adsorption comportant un orifice d'alimentation (16) permettant d'introduire le gaz d'alimentation et un orifice de produit permettant de retirer le gaz produit ;
(b) une zone d'élimination d'eau (22) contenant un adsorbant sélectif de l'eau permettant d'adsorber l'eau du gaz d'alimentation et située adjacente à l'orifice d'alimentation ;
(c) une zone d'élimination de CO₂ (24) contenant un adsorbant sélectif du CO₂ permettant d'adsorber le CO₂ du gaz d'alimentation et située entre la zone d'élimination de l'eau et l'orifice de produit ;
(d) le procédé effectue un cycle entre une séquence d'adsorption et une séquence de régénération ;
(e) pendant la séquence d'adsorption :
(i) le gaz d'alimentation (12) est passé à travers la cuve en commençant au niveau de l'orifice d'alimentation (16) ;
(ii) au moins une partie de l'adsorbant sélectif de l'eau devient saturée en eau ;
(iii) au moins une partie de l'adsorbant sélectif du CO₂ devient saturée en CO₂ ; et
(iv) le gaz produit (20) est retiré de l'orifice de produit (18) ;
(f) pendant la séquence de régénération :
(i) la cuve est dépressurisée à une pression inférieure ;
(ii) en commençant au niveau de l'orifice de produit (18), un gaz de régénération chauffant est passé à travers la cuve lequel fournit une quantité de chaleur de régénération sous forme d'impulsion de chaleur pour désorber quasiment tout le CO₂ adsorbé pendant la séquence d'adsorption et seule une partie de l'eau adsorbée pendant la séquence d'adsorption ; et
(iii) en commençant au niveau de l'orifice de produit (18), un gaz de régénération refroidissant est passé à travers la cuve pour désorber la plus grande partie ou quasiment la totalité de l'eau restante adsorbée pendant la séquence d'adsorption ; et
(iv) la cuve est pressurisée avec le gaz d'alimentation pour préparer la cuve à sa séquence d'adsorption suivante ;
**caractérisé en ce que**, en considérant l'adsorbant sélectif de l'eau contenu dans la zone d'élimination de l'eau comme constitué de dix couches théoriques d'épaisseur égale (1 à 10) la couche 1 commençant à la fin de la zone d'élimination de l'eau (22) adjacente à l'orifice de gaz d'alimentation (16) et les couches se succédant séquentiellement jusqu'à la couche 10 à la fin de la zone d'élimination de l'eau (22) qui est adjacente à la zone d'élimination du CO₂ (24), la quantité de chaleur de régénération pour la séquence de régénération suivante est ajustée en fonction de données de température prises dans une « portion stratégique » de la zone d'absorbant sélectif de l'eau comprenant trois à quatre couches consécutives quelconques entre les couches 2 et 9 incluses de sorte que l'impulsion de chaleur meurt avec ladite portion stratégique.

2. Procédé selon la revendication 1, dans lequel la portion stratégique comprend les couches 6 à 9.

3. Procédé selon la revendication 2, dans lequel les données de température sont obtenues depuis un emplacement dans la couche 9 et depuis un emplacement dans la couche 6.

4. Procédé selon l'une quelconque des revendications précédentes, dans lequel la quantité de chaleur à fournir par le gaz de régénération chauffé est également ajustée en fonction de la teneur en eau du gaz d'alimentation.

5. Procédé selon l'une quelconque des revendications précédentes, dans lequel le gaz d'alimentation (12) est l'air.

6. Procédé selon la revendication 5, dans lequel le gaz produit (20) est délivré à l'unité de séparation d'air cryogénique et séparé en ses composants constitutifs.

7. Procédé selon l'une quelconque des revendications 1 à 4, dans lequel le gaz d'alimentation (12) est le gaz naturel.

8. Procédé selon l'une quelconque des revendications 1 à 4, dans lequel le gaz d'alimentation (12) est un gaz de synthèse comprenant du monoxyde de carbone et de l'hydrogène.

9. Procédé selon l'une quelconque des revendications précédentes, dans lequel l'absorbant sélectif de l'eau est l'alumine activée.

10. Procédé selon l'une quelconque des revendications 1 à 6, dans lequel l'absorbant sélectif de l'eau est un gel de silice.

11. Procédé selon l'une quelconque des revendications précédentes, dans lequel l'absorbant sélectif du CO₂ est un tamis moléculaire.

12. Procédé selon l'une quelconque des revendications précédentes, dans lequel la cuve d'adsorption (14) est une cuve à écoulement vertical où l'orifice d'alimentation (16) est situé au fond de la cuve d'adsorption et le gaz d'alimentation circule vers le haut à travers la cuve d'adsorption avant d'atteindre l'orifice de produit (18) situé au sommet de la cuve d'adsorption.

13. Procédé selon l'une quelconque des revendications 1 à 11, dans lequel la cuve d'adsorption est une cuve à écoulement radial où l'orifice d'alimentation distribue le gaz d'alimentation dans l'extérieur de la cuve d'adsorption, et le gaz d'alimentation circule radialement à travers la cuve d'adsorption avant d'atteindre l'orifice de produit situé à l'extérieur de la cuve d'adsorption.
